# EUROPÄISCHE PATENTANMELDUNG

(11) **EP 1 468 935 A1**
(43) Veröffentlichungstag der Anmeldung: **20.10.2004**
(21) Anmeldenummer: 03405270.4
(22) Anmeldetag: 16.04.2003
(51) Int. Cl.: B65D 75/36, B65D 75/28, A61J 1/03

(54) **Blisterverpackung**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Ein Tropenblister (10) für pharmazeutische Produkte, Diagnostika oder medizinische Geräte besteht aus einem aus Kunststoff thermogeformten Blisterbodenteil (12), einer Deckfolie (16) aus Aluminium oder einem Aluminium/Kunststoff-Verbund und einer gegen die Rückseite des Blisterbodenteils (12) gesiegelten, aus einer Aluminium/Kunststoff-Verbundfolie kaltgeformten Untersiegelwanne (18). Die Aluminium/Kunststoff-Verbundfolie der Untersiegelwanne (18) weist auf der gegen das Blisterbodenteil (12) gerichteten Seite eine peelbare Heisssiegelschicht aus einem Lack mit einem Auftragsgewicht von 2 bis 20 g/m², vorzugsweise 7 bis 15 g/m², einen peelbaren Kunststofffilm mit einer Foliendicke von 10 bis 40 µm, vorzugsweise 15 bis 30 µm, oder eine peelbare Kunststoffbeschichtung mit einem Auftragsgewicht von 5 bis 40 g/m², vorzugsweise 7 bis 20 g/m², auf. Die vom Blisterbodenteil (12) durch Peelen entfernbare Untersiegelwanne (18) ermöglicht die Sicht auf das Füllgut im Blister (10). Zur Erzielung einer optimalen Haltbarkeit des Füllgutes auch nach der Entfernung der Aluminium/Kunststoff-Verbundfolie der Untersiegelwanne weist der Kunststoff des Bodenteils eine Barriere mit Durchtrittsperrwirkung gegen Wasserdampf und/oder Gase auf.

## Beschreibung

Die Erfindung betrifft eine Blisterverpackung für pharmazeutische Produkte, Diagnostika oder medizinische Geräte, mit einem aus Kunststoff thermogeformten Blisterbodenteil, einer Deckfolie aus Aluminium oder einem Aluminium/Kunststoff-Verbund und einer gegen die Rückseite des Blisterbodenteils gesiegelten, aus einer Aluminium/Kunststoff-Verbundfolie kaltgeformten Untersiegelwanne.

Bei den unter dem Begriff "Tropenblister" bekannten Blisterverpackungen mit thermogeformtem Blisterbodenteil besteht die Deckfolie aus Aluminium oder einem Aluminium/Kunststoff-Verbund und gegen die Rückseite des Blisterbodenteils ist eine aus einem Aluminium/Kunststoff-Laminat kaltgeformte Untersiegelwanne gesiegelt. Damit ist bei einem Tropenblister das Blisterbodenteil mit dem Füllgut durch die Aluminiumfolien in der Deckschicht und in der Untersiegelwanne vollständig gegen das Eindringen von Wasserdampf und Gasen aus der Aussenatmosphäre geschützt.

Bei den heute bekannten Tropenblistern ist die Untersiegelwanne fest gegen das Bodenteil gesiegelt. Das Füllgut wird durch Druck auf das Aluminium/Kunststoff-Laminat und den darunter liegenden, thermogeformten Napf des Bodenteils durch die Deckfolie gedrückt. Da weder das Füllgut noch der einzelne Napf von aussen sichtbar ist, können sich beim Herausdrücken des Füllgutes Probleme ergeben.

Bei Deckfolien, die durch Peelen entfernt werden können, dürfen wegen der Querdiffusion von Feuchtigkeit und Sauerstoff sowie der Gefahr des Abreissens der Deckfolie keine Perforationen angebracht werden. Es besteht deshalb ein sehr hohes Risiko, dass beim Peelen der Deckfolie nicht nur der zur Öffnung vorgesehene Napf freigelegt, sondern auch der benachbarte Napf zumindest teilweise geöffnet wird.

Da das Aluminium/Kunststoff-Laminat der Untersiegelwanne während der Logistikkette einen ausreichenden Schutz des Füllgutes gegen Feuchtigkeit, UV-Strahlen und Sauerstoff gewährleistet, wird als Kunststoff für den thermogeformten Blister PVC oder PVC/ 40 - 60 g/m² PVDC verwendet. Damit die garantierte minimale Haltbarkeit des Füllgutes nicht überschritten wird, muss die Blisterpackung nach der erstmaligen Entnahme von Füllgut in verhältnismässig kurzer Zeit aufgebraucht werden.

Der Erfindung liegt die Aufgabe zugrunde, einen Tropenblister der eingangs genannten Art zu schaffen, bei dem das Füllgut vor der Entnahme sichtbar ist und damit ohne Beschädigung benachbarter Bereiche durch die Deckfolie gedrückt werden kann. Zudem soll die Haltbarkeit des Füllgutes, in Abhängigkeit des für das thermogeformte Bodenteil verwendeten Kunststoffmaterials, nach der erstmaligen Entnahme von Füllgut für die verbleibende Packung länger gewährleistet sein.

Zur erfindungsgemässen Lösung der Aufgabe führt, dass die Aluminium/Kunststoff-Verbundfolie der Untersiegelwanne auf der gegen das Blisterbodenteil gerichteten Seite eine peelbare Heisssiegelschicht aus einem Lack mit einem Auftragsgewicht von 2 bis 20 g/m², vorzugsweise 7 bis 15 g/m², einen peelbaren Kunststofffilm mit einer Foliendicke von 10 bis 40 µm, vorzugsweise 15 bis 30 µm, oder eine peelbare Kunststoffbeschichtung mit einem Auftragsgewicht von 5 bis 40 g/m², vorzugsweise 7 bis 20 g/m², aufweist.

Selbstverständlich kann die erfindungsgemässe Lösung auch für die derzeit eingesetzten thermogeformten Kunststoffe für die "Untersiegelwanne" verwendet werden.

Zur Erzielung einer optimalen Haltbarkeit des Füllgutes weist der Kunststoff des Blisterbodenteils eine Barriere mit Durchtrittsperrwirkung gegen Wasserdampf und/oder Gase auf.

Der Kunststoff des Blisterbodenteils mit Barriereeigenschaften kann aus einem Laminat mit der Schichtfolge PVC/PVDC, PVC/PE/PVDC, PVC/PCTFE, PVC/PE/ PCTFE, PVC/PCTFE/PVC, PVC/PE, PVC/COC/PE, PVC/COC/PVC, PVC/COC/PVDC, PVC/COC/PP, PVC/COC/PE, PVC/COC, PP/PVDC, PP/PCTFE, PP/PCTFE/PP, PP/COC/PP, PP/PET, PP/PE, PP/COC/PE, PP/COC/PCTFE, PP/COC, PET/PP/PVDC, PET/COC/PP, PET/COC/PVC, PET/COC/PVDC, PET/COC/PE, PET/PVC/PCTFE, PET/COC, PE/PCTFE, HDPE/PVDC, HDPE/PVC, PE/PCTFE/PE, PE/COC/PVDC, PE/COC aufgebaut sein. Das Blisterbodenteil kann aber auch aus LCP, HDPE, PP, PVC oder LCP enthaltendem PET bestehen.

Das Blisterbodenteil kann auch aus den üblicherweise eingesetzten Kunststoffen ohne spezielle Barriereeigenschaften aufgebaut sein, sofern die beschränkte Haltbarkeit des Füllgutes nach Entfernen der Untersiegelwanne beachtet wird.

Bei der erfindungsgemässen Blisterverpackung wird eine Durchdrückfolie als Deckfolie bevorzugt. Wird jedoch eine peelbare Öffnung gewünscht, können die vorgeschlagenen Lösungen selbstverständlich ebenfalls verwendet werden.

Die gegen die Rückseite des Blisterbodenteils gerichtete peelbare Heisssiegelschicht der Aluminium/Kunststoff-Verbundfolie der Untersiegelwanne ist zweckmässigerweise mit den gleichen chemischen Grundkomponenten wie der die Siegelfläche bildende Kunststoff des Blisterbodenteils oder Abmischungen dieser Grundkomponenten mit Stoffen, die einen adhäsiven oder kohäsiven Bruch bewirken, aufgebaut.

Stoffe, die einen adhäsiven oder kohäsiven Bruch bewirken, sind z.B. Acrylate, Polybutylate, Morprime, Styrolacrylat mit Polyolefingruppen, PVC/AC plus Acrylat, PP/Butadien oder Polyester/Butadien/Styrol.

Der gegen die Rückseite des Blisterbodenteils gerichtete peelbare Kunststofffilm oder die gegen die Rückseite des Blisterbodenteils gerichtete peelbare Kunststoffbeschichtung ist bevorzugt auf der Basis von PVC, PP, Metallocen-PP, PE, Metallocen-PE, ACLAR® (PCTFE), PET, EAA, lonomeren von PE und PE-Acrylaten, EVA und Copolymeren mit EVA aufgebaut.

Der peelbare Kunststofffilm kann mit einer peelbaren Beschichtung extrudiert, coextrudiert oder lackkaschiert, die Kunststoffbeschichtung mit einer peelbaren Schicht coextrudiert sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch einen Teil einer Blisterverpackung mit peelbarer Untersiegelwanne und Aufreisslasche;
- Fig. 2 eine Ansicht der Blisterverpackung von Fig. 1 mit einer ersten Ausführung einer Aufreisslasche in Blickrichtung A;
- Fig. 3 eine Ansicht der Blisterverpackung von Fig. 1 mit einer zweiten Ausführungsform einer Aufreisslasche in Blickrichtung A;
- Fig. 4 eine Ansicht der Blisterverpackung von Fig. 1 mit einer dritten Ausführungsform einer Aufreisslasche in Blickrichtung A.

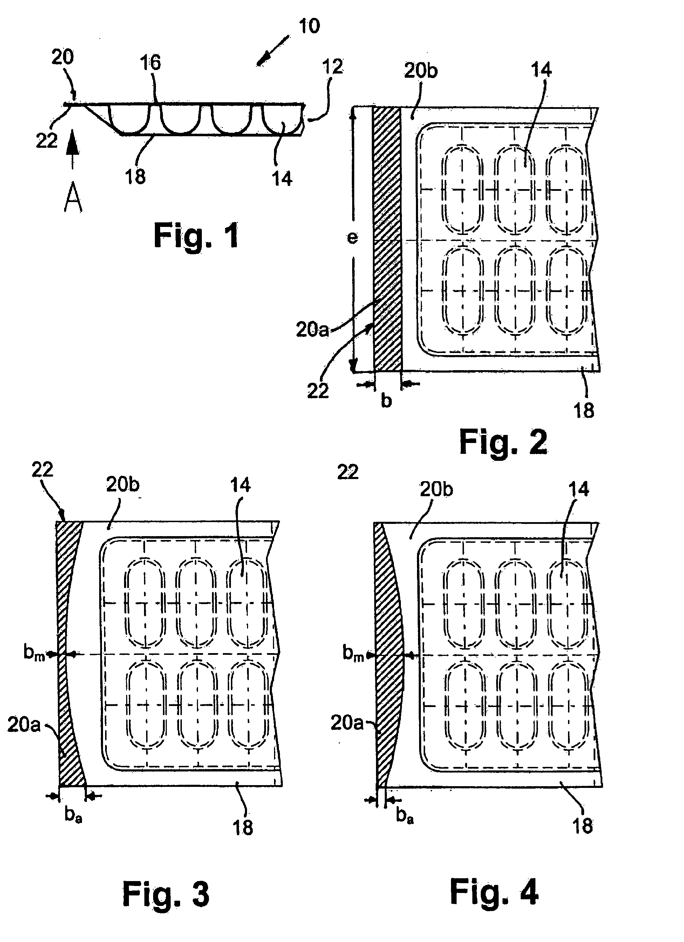

Eine den Fig. 1 bis 4 gezeigte Blisterverpackung 10 in der Form eines Tropenblisters weist ein Bodenteil 12 mit von diesem ausgeformten einzelnen Blistern oder Näpfen 14 zur Aufnahme eines in der Zeichnung nicht dargestellten pharmazeutischen Füllgutes wie z.B. Tabletten oder Kapseln, Diagnostika oder medizinische Geräte auf. Gegen das Bodenteil 12 ist auf der Seite der Oeffnungen der Näpfe 14 eine die Näpfe 14 dicht verschliessende Deckfolie 16 gesiegelt.

Auf der der Deckfolie 16 gegenüberliegenden Seite erstreckt sich eine weitere Folie in der Form einer Untersiegelwanne 18 über die ausgeformten Näpfe 14 und ist peelbar gegen einen umlaufenden Rand 20 des Bodenteils 12 gesiegelt. Die Barriereeigenschaften der Untersiegelwanne 18 verhindern ein Eindringen von Wasserdampf und Gasen von der Aussenatmosphäre in den Füllraum der Näpfe 14.

Im Bereich einer Seitenkante der Blisterverpackung 10 ist die Untersiegelwanne unter Bildung einer Aufreisslasche 22 in einem schmalen Bereich 20a nicht gegen das Bodenteil 12 gesiegelt. In den Fig. 2 bis 4 sind unterschiedliche Ausführungen von Aufreisslaschen 22 bzw. entsprechend ungesiegelter Zonen dargestellt. Bei einer beispielhaften Seitenkantenlänge e der Blisterverpackung 10 von 68 mm weist die Aufreisslasche von Fig. 2 eine gleichbleibende Breite b von 7 mm auf. Die Aufreisslasche von Fig. 3 weist in der Mitte eine Breite bₘ von beispielsweise 2 mm und aussen eine Breite bₐ von 7 mm auf. Bei der Aufreisslasche von Fig. 4 ist die Breite bₘ in der Mitte 7 mm, die Breite bₐ am Aussenrand 2 mm.

In der nachstehenden Tabelle sind Beispiele von erfindungsgemäss als Material für die Herstellung der kaltgeformten Untersiegelwanne verwendeten Aluminium/Kunststoff-Laminaten zusammengestellt. Mit "Beschichtung aussen" ist die nach aussen, mit "Beschichtung innen" die zur Siegelung gegen den Kunststoff an der Aussenseite des Blisterbodenteils gerichtete Beschichtung/Lackierung der Aluminiumfolie bezeichnet, jeweils unter Angabe des Flächengewichts bei Beschichtung/Lackierung bzw. der Foliendicke bei Kaschierung der Kunststofffolie. Die Tabelle enthält zudem die entsprechend der innenseitigen Beschichtung/Lackierung der Laminate der Untersiegelwanne für die Aussenseite des Blisterbodenteil ausgewählten Kunststoffe, gegen welche die Siegelung des Aluminium/Kunststoff-Laminates durchgeführt wird.

| **Beispiel** | **Beschichtung aussen** | **Al- Folie** | **Beschichtung innen** | **Bodenteil aussen** |
|---|---|---|---|---|
| 1 | oPA, 25 µm | 45 µm | _{HSL (Heisssiegellack) auf Basis PVC/AC plus} Acrylat, 10 g/m² | PVDC oder PVC |
| 2 | oPA, 25 µm | 60 µm | | |
| 3 | oPP, 20 µm | 45 µm | | |
| 4 | PET-Folie, 23 µm | 45 µm | | |
| 5 | oPA, 25 µm | 45 µm | HSL auf Basis Acrylat mit Polyolefingruppen, 10g/m² | |
| 6 | oPA, 25 µm | 45 µm | PVC-Folie, 10 µm, peelbar | |
| 7 | oPA, 25 µm | 45 µm | PVC-Folie, 15 µm, peelbar | |
| 8 | oPA, 25 µm | 45 µm | HSL auf Basis PP/Butadien, 10 g/m² | PP |
| 9 | oPA, 25 µm | 60 µm | | |
| 10 | oPP, 20 µm | 45 µm | | |
| 11 | PET-Folie, 23 µm | 45 µm | | |
| 12 | oPA, 25 µm | 45 µm | HSL auf Basis Acrylat mit Polyolefingruppen, 10g/m² | |
| 13 | oPA, 25 µm | 45 µm | PP-Folie, 20 µm, peelbar | |
| 14 | oPA, 25 µm | 45 µm | HSL auf Basis PVC/AC plus Acrylat, 10 g/m² | PET |
| 15 | oPA, 25 µm | 60 µm | | |
| 16 | oPP, 20 µm | 45 µm | | |
| 17 | PET-Folie, 23 µm | 45 µm | | |
| 18 | oPA, 25 µm | 45 µm | HSL auf Basis Polyester mit Acrylat, 10 g/m² | |
| 19 | oPA, 25 µm | 40 µm | HSL auf Basis PVC/AC plus Acrylat, 10 g/m² | |
| 20 | oPA, 25 µm | 45 µm | PET-Folie, 12 µm, peelbar | |
| 21 | oPA, 25 µm | 45 µm | HSL auf Basis Polyester/Butadien/Styrol, 10 g/m² | PE |
| 22 | oPA, 25 µm | 60 µm | | |
| 23 | oPA, 25 µm | 40 µm | | |
| 24 | oPA, 25 µm | 36 µm | | |
| 25 | oPP, 20 µm | 45 µm | | |
| 26 | PET-Folie, 23 µm | 45 µm | | |
| 27 | oPA, 25 µm | 45 µm | HSL auf Basis Acrylat mit Polyolefingruppen, 10 g/m² | |
| 28 | oPA, 25 µm | 45 µm | PE-peel-Folie, 40 µm | |
| 29 | oPA, 25 µm | 40 µm | HSL auf Basis PVC/AC plus Acrylat, 10 g/m² | |
| 30 | oPA, 25 µm | 36 µm | | |
| 31 | oPA, 25 µm | 40 µm | HSL auf Basis PP/Butadien, 10 g/m² | |
| 32 | oPA, 25 µm | 36 µm | | |
| 33 | oPA, 25 µm | 36 µm | HSL auf Basis PVC/AC plus Acrylat, 10 g/m² | |
| 34 | oPA, 25 µm | 45 µm | HSL auf Basis EVA/Acrylat, 10 g/m² | ACLAR® (PCTFE) |
| 35 | oPA, 25 µm | 60 µm | | |
| 36 | oPA, 25 µm | 40 µm | | |
| 37 | oPA, 25 µm | 36 µm | | |
| 38 | oPP, 20 µm | 45 µm | | |
| 39 | PET-Folie, 23 µm | 45 µm | | |
| 40 | oPA, 25 µm | 45 µm | HSL auf Basis ACLAR® /EVA/ Acrylat | |
| 41 | oPA, 25 µm | 45 µm | HSL auf Basis EVA/Copolymer, 20 g/m² | |

## Patentansprüche

1. Blisterverpackung für pharmazeutische Produkte, Diagnostika oder medizinische Geräte, mit einem aus Kunststoff thermogeformten Blisterbodenteil (12), einer Deckfolie (16) aus Aluminium oder einem Aluminium/Kunststoff-Verbund und einer gegen die Rückseite des Blisterbodenteils (12) gesiegelten, aus einer Aluminium/Kunststoff-Verbundfolie kaltgeformten Untersiegelwanne (18),
**dadurch gekennzeichnet, dass**
die Aluminium/Kunststoff-Verbundfolie der Untersiegelwanne (18) auf der gegen das Blisterbodenteil (12) gerichteten Seite eine peelbare Heisssiegelschicht aus einem Lack mit einem Auftragsgewicht von 2 bis 20 g/m², einen peelbaren Kunststofffilm mit einer Foliendicke von 10 bis 40 µm, vorzugsweise 15 bis 30 µm, oder eine peelbare Kunststoffbeschichtung mit einem Auftragsgewicht von 5 bis 40 g/m², vorzugsweise 7 bis 20 g/m², aufweist.

2. Blisterverpackung nach Anspruch 1, **dadurch gekennzeichnet, dass** die peelbare Heisssiegelschicht aus einem Lack mit einem Auftragsgewicht von 7 bis 15 g/m² besteht.

3. Blisterverpackung nach Anspruch 1, **dadurch gekennzeichnet, dass** der peelbare Kunststofffilm eine Foliendicke von 15 bis 30 µm aufweist.

4. Blisterverpackung nach Anspruch 1, **dadurch gekennzeichnet, dass** die peelbare Kunststoffbeschichtung ein Auftragsgewicht von 7 bis 20 g/m² aufweist.

5. Blisterverpackung nach einem der Ansprüche 1 bis 4, **dadurch gekennzeichnet, dass** der Kunststoff des Blisterbodenteils (12) eine Barriere mit Durchtrittsperrwirkung gegen Wasserdampf und/oder Gase aufweist.

6. Blisterverpackung nach Anspruch 5, **dadurch gekennzeichnet, dass** das Blisterbodenteil (12) aus einem Laminat mit der Schichtfolge PVC/PVDC, PVC/PE/PVDC, PVC/PCTFE, PVC/PE/ PCTFE, PVC/PCTFE/PVC, PVC/PE, PVC/COC/PE, PVC/COC/PVC, PVC/COC/PVDC, PVC/COC/PP, PVC/COC/PE, PVC/COC, PP/PVDC, PP/PCTFE, PP/PCTFE/PP, PP/COC/PP, PP/PET, PP/PE, PP/COC/PE, PP/COC/PCTFE, PP/COC, PET/PP/PVDC, PET/COC/PP, PET/COC/PVC, PET/COC/PVDC, PET/COC/PE, PET/PVC/PCTFE, PET/COC, PE/PCTFE, HDPE/PVDC, HDPE/PVC, PE/PCTFE/PE, PE/COC/PVDC, PE/COC oder aus LCP, HDPE, PP, PVC oder LCP enthaltendem PET aufgebaut ist.

7. Blisterverpackung nach einem der Ansprüche 1 bis 6, **dadurch gekennzeichnet, dass** die von der Rückseite des Blisterbodenteils (12) peelbare Aluminium/Kunststoff-Verbundfolie der Untersiegelwanne (18) eine 15 bis 80 µm, vorzugsweise 25 bis 60 µm dicke Aluminiumfolie ist, die auf der vom Blisterbodenteil (12) weg weisenden Seite
- mit einer Kunststofffolie aus orientiertem Polyamid (oPA), Polyethylenterephtalat (PET) oder orientiertem Polypropylen (oPP) mit einer Foliendicke von 10 bis 30 µm, vorzugsweise 15 bis 25 µm kaschiert ist, oder
- mit einem Schutzlack auf der Basis der Lackrohstoffe Nitrocellulose, Epoxyharz, Polyester, Polyurethan oder Abmischungen der genannten Lackrohstoffe mit einem Auftragsgewicht von 1 bis 20 g/m², vorzugsweise 7 bis 15 g/m², lackiert ist.

8. Blisterverpackung nach einem der Ansprüche 1 bis 7, **dadurch gekennzeichnet, dass** die gegen die Rückseite des Blisterbodenteils (12) gerichtete peelbare Heisssiegelschicht mit den gleichen oder ähnlichen chemischen Grundkomponenten wie der die Siegelfläche bildende Kunststoff des Blisterbodenteils (12) oder Abmischungen dieser Grundkomponenten mit Stoffen, die einen adhäsiven oder kohäsiven Bruch bewirken, aufgebaut ist.

9. Blisterverpackung nach Anspruch 8, **dadurch gekennzeichnet, dass** der Lack als Stoffe, die einen adhäsiven oder kohäsiven Bruch bewirken, Acrylate, Polybutylate, Morprime, Styrolacrylat mit Polyolefingruppen, PVC/AC mit Acrylat, PP/Butadien oder Polyester/Butadien/Styrol enthält.

10. Blisterverpackung nach einem der Ansprüche 1 bis 9, **dadurch gekennzeichnet, dass** der gegen die Rückseite des Blisterbodenteils (12) gerichtete peelbare Kunststofffilm oder die gegen die Rückseite des Blisterbodenteils (12) gerichtete peelbare Kunststoffbeschichtung auf der Basis von PVC, PP, Metallocen-PP, PE, Metallocen-PE, PCTFE, PET, EAA, lonomeren von PE und PE-Acrylaten, EVA und Copolymeren mit EVA aufgebaut ist.

11. Blisterverpackung nach Anspruch 10, **dadurch gekennzeichnet, dass** der peelbare Kunststofffilm mit einer peelbaren Beschichtung extrudiert, coextrudiert oder lackkaschiert ist.

12. Blisterverpackung nach Anspruch 10, **dadurch gekennzeichnet, dass** die Kunststoffbeschichtung mit einer peelbaren Schicht coextrudiert ist.
